(19) **Europäisches Patentamt European Patent Office Office européen des brevets**

(11) **EP 1 437 548 B1**

(12) **EUROPEAN PATENT SPECIFICATION**

(45) Date of publication and mention
of the grant of the patent:
**31.10.2007 Bulletin 2007/44**

(51) Int Cl.:
*F23G 5/50* (2006.01)     *F23N 5/00* (2006.01)
*F23N 5/02* (2006.01)

(21) Application number: **04250056.1**

(22) Date of filing: **07.01.2004**

(54) **Methods and systems for measuring and controlling the percent stoichiometric oxidant in an incinerator**

Verfahren und Vorrichtungen zum Messen und Regeln des stöchiometrischen Sauerstoffverhältnisses in einer Verbrennungsanlage

Procédés et dispositifs pour mesurer et commander le pourcentage stoichiométrique d' oxidant dans un incinérateur

(84) Designated Contracting States:
**AT BE BG CH CY CZ DE DK EE ES FI FR GB GR HU IE IT LI LU MC NL PT RO SE SI SK TR**

(30) Priority: **09.01.2003 US 339362**

(43) Date of publication of application:
**14.07.2004 Bulletin 2004/29**

(73) Proprietor: **JOHN ZINK COMPANY,L.L.C.**
**Tulsa, OK 74116 (US)**

(72) Inventors:
• **Arnold, Kenny M**
  **Broken Arrow,**
  **Oklahoma 74011 (US)**
• **Hong, Jianhui**
  **Broken Arrow,**
  **Oklahoma 74014 (US)**
• **Smith, Joseph D**
  **Owasso,**
  **Oklahoma 74055 (US)**

(74) Representative: **Roberts, Mark Peter**
**J.A. Kemp & Co.**
**14 South Square**
**Gray's Inn**
**London WC1R 5JJ (GB)**

(56) References cited:
EP-A- 0 561 044     US-A- 4 182 246
US-A- 4 395 958     US-A- 4 517 906

**Description**

This invention relates generally to combustion processes and more particularly to methods and devices for measuring the percent stoichiometric oxidant (PSO) in the pyrolysis section of incinerators.

In incineration applications, it is common practice to employ two stages of combustion. In the first stage, combustion air is supplied at a rate less than the stoichiometric air requirement. The stoichiometric air requirement is defined as the air flow rate required for complete combustion of the fuel and waste streams. Complete combustion means that the products of combustion are stable compounds such as $CO_2$, $H_2O$, $N_2$ and He (if existing).

Thus, in the first stage the wastes are commonly pyrolyzed in an oxygen-deficient atmosphere. This furnace, or portion of the furnace, is commonly referred to as a reduction, primary combustion, oxygen-deficient, or pyrolyzing furnace or chamber. Additional combustion air is then supplied at a subsequent section to destroy any products of incomplete combustion. This secondary section is typically referred to as a re-oxidation section or afterburner.

Such a typical system is described in e.g. EP-A-0561044, US-A-4 517 906, US-A-4 182 246 or US-A-4 395 958.

Pollutant emissions are strongly influenced by the amounts of combustion air supplied to the pyrolyzing section and the afterburner. Therefore, it is highly desirable to be able to measure and control the air supply to both sections. The air supply to the afterburner is typically regulated to achieve a certain level of excess oxygen in the stack exhaust gases, or in some cases to achieve a target temperature. The air, or oxidant, supply to the pyrolyzing section is more difficult to control. It is desirable to measure and control the oxidant supply to the pyrolyzing section as a percent stoichiometric oxidant, or "PSO." The PSO is equal to the actual oxidant supply divided by the stoichiometric oxidant supply expressed as a percent. Although oxidants include compounds such as NO and $NO_2$, in practice the main source of oxidant for incinerators is generally air. Therefore the term "PSA" (percent stoichiometric air) is often used in place of PSO.

The PSO can also be related to an equivalence ratio. The equivalence ratio is defined as the actual fuel-to-air ratio divided by the stoichiometric fuel-to-air ratio. The equivalence ratio is related to PSO in that the equivalence ratio is simply 100/PSO. Where fuel and air are supplied to achieve complete combustion, the reaction is said to be stoichiometric, the PSO is equal to 100% and the equivalence ratio is equal to 1.

One common means of directly regulating the air supply to the pyrolyzing furnace is to measure the flow rates of fuel, waste, and air; calculate the PSO; and then control the PSO to a certain value by changing the air supply. Waste compositions often vary with time, or are simply unknown. In practice, because of the difficulties associated with the uncertainties and fluctuations in waste compositions, the waste is often excluded from the stoichiometric air requirement calculation. Because of this exclusion, the method cannot accurately reflect the correct air requirement.

Other common methods for controlling the air supply are either measuring and controlling the combustible level in the pyrolyzing furnace or measuring the temperature change due to addition of afterburner air. These methods are indirect ways of controlling the PSO.

Oxygen sensors have been used to measure the air/fuel ratio, or equivalence ratio, in internal combustion engines and such devices have been widely used in automobiles. These sensors do not take into account the dependency of equivalence ratio on oxygen level and temperature and therefore cannot operate in wide ranges of temperatures. However, such devices are able to neglect the effect of temperature on predictions of the equivalence ratio because the exhaust gas temperatures are normally regulated within a relatively narrow range.

Other devices that have recognized the need to take into account the effects of temperature utilize semiconductor chips processed to exhibit a rapid change in electrical resistance responsive to differences in exhaust gas temperature. The temperature-dependent electrical resistance is used to compensate the signal from the oxygen sensor to produce a more accurate prediction of the PSO. Due to the mechanical and electrical characteristics of the materials used in the temperature-compensating chips, such devices cannot be operated in the high temperatures (760°C to 1760°C-1400° to 3200°F) commonly seen in the pyrolyzing sections of incinerators.

Thus, there are needs for methods to directly measure the PSO in pyrolosis sections of incinerators that avoid the problems described above.

The invention is defined in the claims.

By the present invention, methods of measuring and controlling the percent stoichiometric oxidant, "PSO," in the pyrolyzing section of an incinerator, and systems for use in measuring and controlling the PSO are provided which meet the above-described needs and overcome the deficiencies of the prior art. The methods for measuring the PSO in the pyrolyzing section of an incinerator are basically comprised of the following steps. An electrical signal corresponding to oxygen concentration is generated utilizing an oxygen sensor positioned to sense oxygen concentration or partial pressure in the gases within the pyrolyzing section. An electrical signal corresponding to temperature is generated using a temperature sensor positioned to sense the temperature of the gases within the pyrolyzing section. The electrical signals are then conducted to a processor for converting the electrical signals from the oxygen sensor and the temperature sensor to an estimate of the PSO using a mathematical relationship between the electrical signals and the PSO.

Methods of this invention for controlling the PSO in the pyrolyzing section of an incinerator basically comprise the following steps. An electrical signal is generated corresponding to oxygen concentration in the gases within the pyrolyzing section. An electrical signal is generated corresponding to the temperature of the gases within the pyrolyzing section. The electrical signals corresponding to oxygen concentration and temperature are conducted to a processor for converting the electrical signals to an estimate of the PSO using a mathematical relationship between the electrical signals and the PSO. The PSO estimate is relayed to a feedback controller for generating a combustion air blower, oxidant or fuel flow control signal to adjust the combustion air, oxidant or fuel flow based on the PSO estimate and a pre-selected PSO value. The control signal is then relayed to the combustion air blower, oxidant or fuel control device.

The systems for use in measuring the PSO in the pyrolyzing section of an incinerator basically comprise the following: a means for generating an electrical signal corresponding to oxygen concentration in the gases within the pyrolyzing section, a means for generating an electrical signal corresponding to the temperature of the gases within the pyrolyzing section, and a device for converting the electrical signals corresponding to oxygen concentration and temperature to an estimate of the PSO using a mathematical relationship between the electrical signals and the PSO.

The systems for use in controlling the PSO in the pyrolyzing section of an incinerator basically comprise the following: a means for generating an electrical signal corresponding to oxygen concentration in the gases within the pyrolyzing section, a means for generating an electrical signal corresponding to the temperature of the gases within the pyrolyzing section, a controller for controlling the amount of combustion air, oxidant or fuel to the pyrolyzing section of the incinerator, a device to convert the electrical signals corresponding to oxygen concentration and temperature to an estimate of the PSO using a mathematical relationship between the electrical signals and the PSO, and a means for generating a control signal for the combustion air control device based on the PSO estimate and a pre-selected PSO value.

The invention will be further described, by way of example only, with reference to the accompanying drawings, in which:-

FIG. 1 shows a typical incinerator with the inventive system for measuring the PSO in the pyrolyzing section operation.

FIG. 2 shows a typical incinerator with the inventive system for controlling the flow rate of combustion air to the pyrolyzing section.

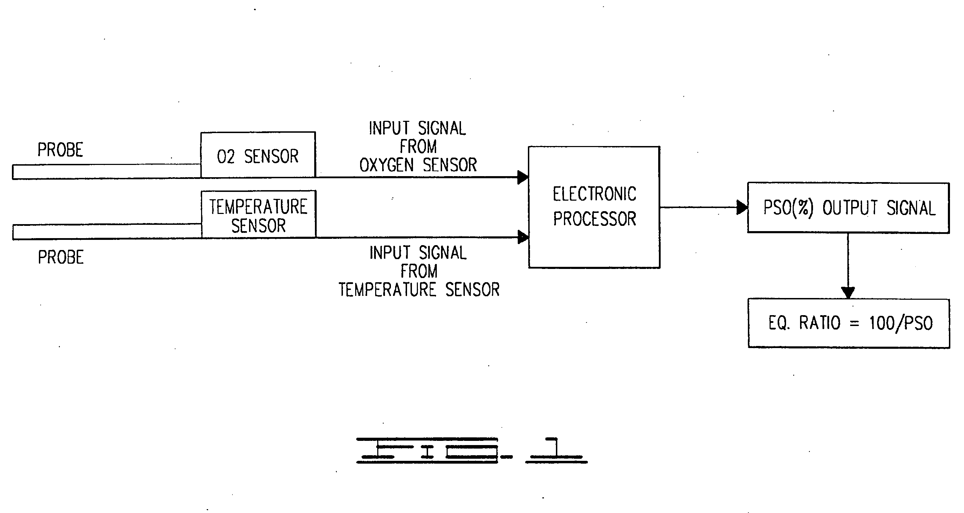

Preferred methods of this invention for measuring the PSO in the pyrolyzing section of an incinerator basically comprise the following steps. An electrical signal corresponding to oxygen concentration is generated utilizing an oxygen sensor positioned to sense oxygen concentration or partial pressure in the gases within the pyrolyzing section. An electrical signal corresponding to temperature is generated using a temperature sensor positioned to sense the temperature of the gases within the pyrolyzing section. The electrical signals are then conducted to a processor for converting the electrical signals from the oxygen sensor and the temperature sensor to an estimate of the PSO using a mathematical relationship between the electrical signals and the PSO. The general method is shown in FIG. 1.

Suitable oxygen sensors that can be used in this invention for generating an electrical signal corresponding to oxygen concentration include, but are not limited to, zirconia-based oxygen sensors, electrochemical sensors, microfuel sensors, and paramagnetic sensors. Of these, zirconia-based sensors are preferred. A particularly suitable oxygen sensor is commercially available under the trade designation "Oxyfire™" from Marathon Sensors, Inc. of Cincinnati, Ohio. The sensor should be positioned to sense the oxygen concentration or partial pressure in the gases just within the pyrolyzing section of the incinerator.

Suitable temperature sensors that can be used in this invention for generating an electrical signal corresponding to temperature include, but are not limited to, thermocouples, resistance temperature detectors, pyrometers and remote temperature devices. Of these, thermocouples are preferred. Particularly suitable thermocouples are commercially available as Type B or Type R integral thermocouple probes available from Marathon Sensors, Inc. of Cincinnati, Ohio. The sensor should be positioned to sense the temperature of the gases just within the pyrolyzing section of the incinerator and as close as possible to the oxygen sensor.

Signals from the oxygen and temperature sensors are conducted to a processor to calculate an estimate of the PSO. A particularly suitable processor is commercially available as a "Series F4™" unit from Watlow Electric Manufacturing Company of St. Louis, Missouri.

The processor calculates an estimate of the PSO using a mathematical relationship developed from equilibrium calculations. This method is based on the initial assumption that the pyrolyzing section has a residence time long enough to allow the oxygen concentration to reach close to its equilibrium value. Adjustments for actual non-equilibrium operating conditions can generally be made once the unit is in operation.

PSO can be expressed as a function of oxygen concentration and temperature in a plurality of different forms. Among these forms, two are found to be most suitable. The first form is:

$$\mathrm{PSO} = a + b/[1 + ((x + eT)/c)^d]$$

where $x$ is the oxygen sensor output in millivolts, $T$ is the temperature in °F, and $a$ through $e$ are empirical constants.

The second expression is in the form of a polynomial:

$$\text{PSO} = a + b(x + eT) + c(x + eT)^2 + d(x+eT)^3$$

where, again, $x$ is the oxygen sensor output in millivolts, $T$ is the temperature in °F, and $a$ through $e$ are empirical constants.

For example, the zirconia-based oxygen sensor is a zirconium oxide, or zirconia, electrolytic cell having a solid state electrolyte that conducts oxygen ions at temperatures above 760°C (1400°F). The ion conduction is reflected in a voltage between the two electrodes. The magnitude of the voltage depends upon the concentration of the oxygen across the cell walls (ratios of the oxygen partial pressures) and the temperature of the cell. The cell e.m.f. can be determined by the Nernst equation:

$$x = \text{-}0.0215\,(T_r)\,\text{Log}_{10}\,(P_O/P_1)$$

where $x$ is the cell output voltage in millivolts; $P_O$ is the partial pressure of oxygen in the cell in %, 20.95%; $P_1$ is the partial pressure of oxygen in the measured process in %; and $T_r$ is the absolute temperature of the probe in degrees K.

The partial pressure of the oxygen in the combustion gases was calculated for equilibrium conditions at various temperatures between 760°C and 1760°C (1400°F and 3000°F) and for different sub-stoichiometric conditions. These values were then input into the Nernst equation to produce the cell output voltages. Then the cell output voltages (x) and the operating temperatures of the combustion gases (T) at the different sub-stoichiometric conditions were empirically evaluated to produce the necessary constants to calculate the percent stoichiometric oxidant (PSO) for any condition within the boundary limits of the data.

The equivalence ratio can also be expressed in terms of the oxygen and temperature signals since the equivalence ratio is simply 100 / PSO. For example, if the PSO is 80%, the equivalence ratio is 100 / 80 or 1.25.

The methods of this invention for measuring PSO can be applied to combustion of many types of waste compounds such as $NH_3$, HCN, $C_2H_3N$, $C_3H_3N$, saturated and unsaturated organic fuels such as paraffins, olefins, cycloparaffins, acetylenes and aromatic compounds with very little error. The accuracy may be affected by excessive amounts of compounds containing bound oxygen such as water ($H_2O$), $NO_2$ and NO. Here "excessive amount" is defined as more than about one pound of bound oxygen from any stream directed into the incinerator (e.g., waste stream or quench stream) for each pound of hydrocarbon fuel where the hydrocarbon fuel can be either waste or the fuel supplied for normal operation.

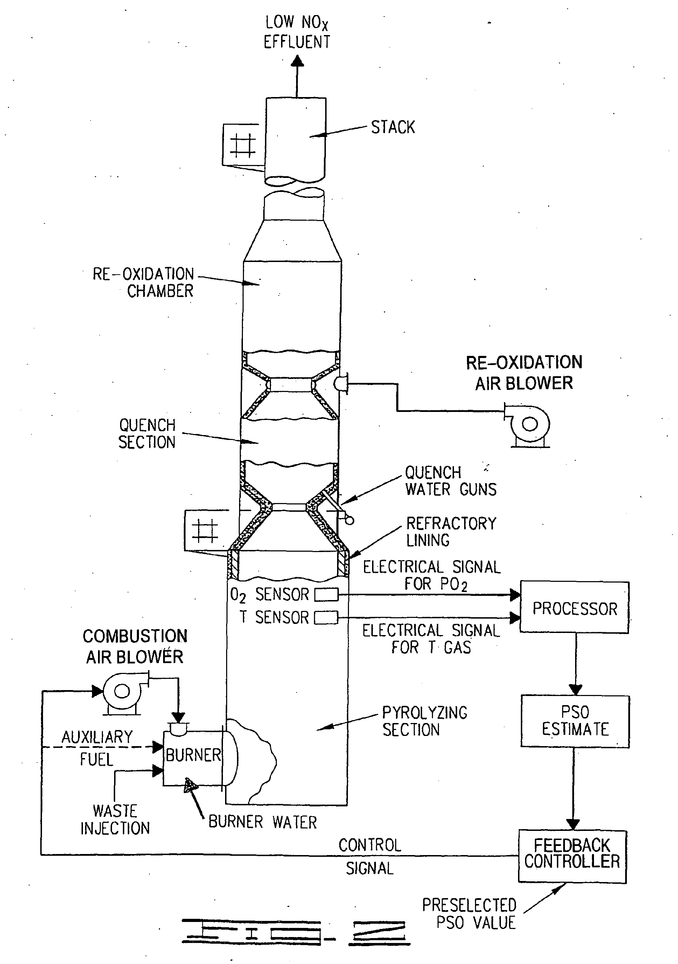

Preferred methods of this invention for controlling the PSO in the pyrolyzing section of an incinerator basically comprise the following steps. An electrical signal is generated corresponding to oxygen concentration in the gases within the pyrolyzing section. An electrical signal is generated corresponding to the temperature of the gases within the pyrolyzing section. The electrical signals corresponding to oxygen concentration and temperature are conducted to a processor for converting the electrical signals to an estimate of the PSO using a mathematical relationship between the electrical signals and the PSO. The PSO estimate is relayed to a feedback controller for generating a combustion air, oxidant or fuel flow control signal to adjust the combustion air, oxidant or fuel flow based on the PSO estimate and a pre-selected PSO value. The control signal is then relayed to the combustion air blower control device. The general method is shown in Fig. 2.

Air is supplied to the pyrolyzing section of the incinerator by means of a blower. The air flow rate can be changed by a number of means including using a valve, changing the blower speed or changing the blower blade pitch. The present invention allows the PSO to be controlled at a pre-selected value by adjusting the blower air flow using a suitable device chosen from the group including, but not limited to, a valve, a blower speed controller or a blower blade pitch adjusting device. This is accomplished by electronically transferring the PSO estimate from the processor to a feedback controller. The feedback controller generates a combustion air blower control device signal based on the PSO estimate and a pre-selected PSO value using standard control procedures known to those skilled in the art.

A preferred system for use in measuring the PSO in the pyrolyzing section of an incinerator basically comprises a means for generating an electrical signal corresponding to oxygen concentration in the gases within the pyrolyzing section, a means for generating an electrical signal corresponding to the temperature of the gases within the pyrolyzing section, and a device for converting the electrical signals corresponding to oxygen concentration and temperature to an estimate of the PSO using a mathematical relationship between the electrical signals and the PSO.

A preferred system for use in controlling the PSO in the pyrolyzing section of an incinerator basically comprises a means for generating an electrical signal corresponding to oxygen concentration in the gases within the pyrolyzing section, a means for generating an electrical signal corresponding to the temperature of the gases within the pyrolyzing section, a combustion air blower, oxidant or fuel control device for controlling the amount of combustion air, oxidant or fuel to the pyrolyzing section of the incinerator, a device to convert the electrical signals corresponding to oxygen concentration and temperature to an estimate of the PSO using a mathematical relationship between the electrical signals and the PSO, and a means for generating a control signal for the combustion air control device based on the PSO estimate and a pre-selected PSO value.

Thus, the present invention is well adapted to attain the objects and advantages mentioned as well as those that are inherent therein. While numerous changes may be made by those skilled in the art, such changes are encompassed within the scope of this invention as defined by the appended claims.

**Claims**

1.  A method for measuring the PSO in the pyrolyzing section of an incinerator under pyrolytic conditions, said method comprising the steps of:

    generating an electrical signal corresponding to the oxygen concentration in the gases within the pyrolyzing section;
    generating an electrical signal corresponding to the temperature of the gases within the pyrolyzing section; and
    conducting said electrical signals to a processor for converting said electrical signals to an estimate of the PSO using a mathematical relationship between the electrical signals and the PSO.

2.  The method of claim 1 wherein said oxygen sensor is selected from the group consisting of zirconia-based oxygen sensors, electrochemical sensors, micro-fuel sensors and paramagnetic sensors.

3.  The method of claim 1 wherein said temperature sensor is selected from the group consisting of thermocouples, resistance temperature detectors, pyrometers and remote temperature devices.

4.  The method of any one of the preceding claims, further comprising the steps of:

    relaying said PSO estimate to a feedback controller for generating a flow control signal to adjust a process flow rate based on said PSO estimate, a pre-selected PSO value, and the process flow, wherein said process flow rate is selected from the group consisting of combustion air, oxidant and fuel flow rates; and
    relaying said flow control signal to the corresponding flow control device.

5.  The method of claim 4 wherein the electrical signal corresponding to the oxygen concentration is generated by an oxygen sensor selected from the group consisting of zirconia based oxygen sensors, electrochemical sensors, microfuel sensors and paramagnetic sensors and positioned in the gases within the pyrolyzing section.

6.  The method of claim 2 or 5, wherein said oxygen sensor is a zirconia-based oxygen sensor.

7.  The method of claim 4 wherein the electrical signal corresponding to the temperature is generated by a temperature sensor selected from the group consisting of thermocouples, resistance temperature detectors, pyrometers and remote temperature devices and positioned to sense the temperature of the gases within the pyrolyzing section.

8.  The method of claim 3 or 7 wherein the temperature sensor is a thermocouple.

9.  The method of any one of the preceding claims, wherein said mathematical relationship is:

$$\mathrm{PSO} = a + b/[1 + ((x + eT)/c)^d\,]$$

    where $x$ is the oxygen sensor output in millivolts, $T$ is the temperature in °F, and $a$ through $e$ are empirical constants.

10. The method of any one of claims 1 to 8, wherein said mathematical relationship is:

$$PSO = a + b(x + eT) + c(x + eT)^2 + d(x+eT)^3$$

where x is the oxygen sensor output in millivolts, $T$ is the temperature in of, and $a$ through $e$ are empirical constants.

11. A system arranged to measure the PSO under pyrolytic conditions in the pyrolyzing section of an incinerator comprising:

a means for generating an electrical signal corresponding to the oxygen concentration in the gases within the pyrolyzing section;
a means for generating an electrical signal corresponding to the temperature of the gases within the pyrolyzing section; and
a device for converting said electrical signals corresponding to oxygen concentration and temperature to an estimate of the PSO using a mathematical relationship between the electrical signals and the PSO.

12. The system of claim 11, further comprising:

a means for generating a flow control signal to adjust a process flow rate based on the PSO estimate, a pre-selected PSO value, and the process flow, wherein said process flow rate is selected from the group consisting of combustion air, oxidant and fuel flow rates; and
a device to adjust the process flow rate corresponding to said control signal.

13. The system of claim 11 or 12 wherein the electrical signal corresponding to the oxygen concentration is generated by an oxygen sensor selected from the group consisting of zirconia-based oxygen sensors, electrochemical sensors, microfuel sensors and paramagnetic sensors and positioned in the gases within the pyrolyzing section.

14. The system of claim 13, wherein said oxygen sensor is a zirconia-based oxygen sensor.

15. The system of claim 11 or 12, wherein the electrical signal corresponding to the temperature is generated by a temperature sensor selected from the group consisting of thermocouples, resistance temperature detectors, pyrometers and remote temperature devices and positioned to sense the temperature of the gases within the pyrolyzing section.

16. The system of claim 15, wherein the temperature sensor is a thermocouple.

17. The system of claim any one of claims 11 to 16, wherein said mathematical relationship is:

$$PSO = a + b/[1 + ((x + eT)/c)^d ]$$

where x is the oxygen sensor output in millivolts, $T$ is the temperature in °F, and $a$ through $e$ are empirical constants.

18. The system of any one of claims 11 to 16, wherein said mathematical relationship is:

$$PSO = a + b(x + eT) + c(x + eT)^2 + d(x+eT)^3$$

where x is the oxygen sensor output in millivolts, $T$ is the temperature in of, and $a$ through $e$ are empirical constants.

**Patentansprüche**

1. Verfahren zum Messen des stöchiometrischen Sauerstoffverhältnisses (PSO) im Pyrolyseabschnitt einer Verbrennungsanlage unter pyrolytischen Bedingungen, wobei dieses Verfahren folgende Schritte umfasst:

Erzeugung eines der Sauerstoffkonzentration in den Gasen im Pyrolyseabschnitt entsprechenden elektrischen Signals;

Erzeugung eines der Temperatur der Gase im Pyrolyseabschnitt entsprechenden elektrischen Signals; und

Leitung dieser elektrischen Signale an einen Prozessor zur Umwandlung dieser elektrischen Signale in eine Schätzung des PSO anhand einer mathematischen Beziehung zwischen den elektrischen Signalen und dem PSO.

2. Verfahren nach Anspruch 1, wobei der Sauerstoffsensor ausgewählt wird aus der Gruppe bestehend aus Sauerstoffsensoren auf Zirkonbasis, elektrochemischen Sensoren, Mikrobrennstoffsensoren und paramagnetischen Sensoren.

3. Verfahren nach Anspruch 1, wobei der Temperatursensor ausgewählt wird aus der Gruppe bestehend aus Thermoelementen, Widerstands-Temperaturmessfühlern, Pyrometern und Ferntemperaturgeräten.

4. Verfahren nach einem der vorangehenden Ansprüche, wobei dieses Verfahren ferner folgende Schritte umfasst:

Weiterleitung der PSO-Schätzung an einen Rückführregler zur Erzeugung eines Durchflussregelungssignals, um eine auf der PSO-Schätzung basierende Prozessdurchflussrate, einen vorgewählten PSO-Wert und den Prozessdurchfluss einzustellen, wobei die Prozessdurchflussrate ausgewählt wird aus der Gruppe bestehend aus Verbrennungsluft-, Oxidationsmittel- und Brennstoffdurchflussrate; und

Leitung dieses Durchflussregelungssignals an das entsprechende Durchflussregelungsgerät.

5. Verfahren nach Anspruch 4, wobei das der Sauerstoffkonzentration entsprechende elektrische Signal von einem Sauerstoffsensor erzeugt wird, der ausgewählt wird aus der Gruppe bestehend aus Sauerstoffsensoren auf Zirkonbasis, elektrochemischen Sensoren, Mikrobrennstoffsensoren und paramagnetischen Sensoren und der in den Gasen im Inneren des Pyrolyseabschnitts positioniert wird.

6. Verfahren nach Anspruch 2 oder 5, wobei der Sauerstoffsensor ein Sauerstoffsensor auf Zirkonbasis ist.

7. Verfahren nach Anspruch 4, wobei das der Temperatur entsprechende elektrische Signal von einem Temperatursensor erzeugt wird, der ausgewählt wird aus der Gruppe bestehend aus Thermoelementen, Widerstands-Temperaturmessfühlern, Pyrometern und Ferntemperaturgeräten und der so positioniert wird, dass er die Temperatur der Gase im Inneren des Pyrolyseabschnitts abfühlt.

8. Verfahren nach Anspruch 3 oder 7, wobei der Temperatursensor ein Thermoelement ist.

9. Verfahren nach einem der vorangehenden Ansprüche, wobei die mathematische Beziehung folgende ist:

$$PSO = a + b/[1+((x + eT)/c)^d],$$

wobei $x$ die Leistung des Sauerstoffsensors in Millivolt ist, $T$ die Temperatur in °F ist und $a$ bis $e$ empirische Konstanten sind.

10. Verfahren nach einem der Ansprüche 1 bis 8, wobei die mathematische Beziehung folgende ist:

$$PSO = a + b(x + eT) + c(x + eT)^2 + d(x + eT)^3,$$

wobei $x$ die Leistung des Sauerstoffsensors in Millivolt ist, $T$ die Temperatur in °F ist und $a$ bis $e$ empirische Konstanten sind.

11. Vorrichtung zum Messen des PSO unter pyrolytischen Bedingungen im Pyrolyseabschnitt einer Verbrennungsanlage, bestehend aus:

einem Mittel zur Erzeugung eines der Sauerstoffkonzentration in den Gasen im Pyrolyseabschnitt entsprechenden elektrischen Signals;

einem Mittel zur Erzeugung eines der Temperatur der Gase im Pyrolyseabschnitt entsprechenden elektrischen Signals; und

einem Gerät zur Umwandlung dieser der Sauerstoffkonzentration und der Temperatur entsprechenden elektrischen Signale in eine Schätzung des PSO anhand einer mathematischen Beziehung zwischen den elektrischen Signalen und dem PSO.

**12.** Vorrichtung nach Anspruch 11, ferner bestehend aus:

einem Mittel zur Erzeugung eines Durchflussregelungssignals, um eine auf der PSO-Schätzung basierende Prozessdurchflussrate, einen vorgewählten PSO-Wert und den Prozessdurchfluss einzustellen, wobei die Prozessdurchflussrate ausgewählt wird aus der Gruppe bestehend aus Verbrennungsluft-, Oxidationsmittel- und Brennstoffdurchflussrate; und

einem Gerät zum Einstellen der Prozessdurchflussrate entsprechend dem Regelungssignal.

**13.** Vorrichtung nach Anspruch 11 oder 12, wobei das der Sauerstoffkonzentration entsprechende elektrische Signal von einem Sauerstoffsensor erzeugt wird, der ausgewählt wird aus der Gruppe bestehend aus Sauerstoffsensoren auf Zirkonbasis, elektrochemischen Sensoren, Mikrobrennstoffsensoren und paramagnetischen Sensoren und der in den Gasen im Inneren des Pyrolyseabschnitts positioniert wird.

**14.** Vorrichtung nach Anspruch 13, wobei der Sauerstoffsensor ein Sauerstoffsensor auf Zirkonbasis ist.

**15.** Vorrichtung nach Anspruch 11 oder 12, wobei das der Temperatur entsprechende elektrische Signal von einem Temperatursensor erzeugt wird, der ausgewählt wird aus der Gruppe bestehend aus Thermoelementen, Widerstands-Temperaturmessfühlern, Pyrometern und Ferntemperaturgeräten und der so positioniert wird, dass er die Temperatur der Gase im Inneren des Pyrolyseabschnitts abfühlt.

**16.** Vorrichtung nach Anspruch 15, wobei der Temperatursensor ein Thermoelement ist.

**17.** Vorrichtung nach einem der Ansprüche 11 bis 16, wobei die mathematische Beziehung folgende ist:

$$PSO = a + b/[1+((x + eT)/c)^d],$$

wobei $x$ die Leistung des Sauerstoffsensors in Millivolt ist, $T$ die Temperatur in °F ist und $a$ bis $e$ empirische Konstanten sind.

**18.** Vorrichtung nach einem der Ansprüche 11 bis 16, wobei die mathematische Beziehung folgende ist:

$$PSO = a + b(x + eT) + c(x + eT)^2 + d(x + eT)^3,$$

wobei $x$ die Leistung des Sauerstoffsensors in Millivolt ist, $T$ die Temperatur in °F ist und $a$ bis $e$ empirische Konstanten sind.

**Revendications**

**1.** Procédé de mesure du PSO (pourcentage stoechiométrique d'oxydant) dans la section de pyrolyse d'un incinérateur dans des conditions pyrolytiques, ledit procédé comprenant les étapes consistant à :

générer un signal électrique correspondant à la concentration en oxygène dans les gaz dans la section de pyrolyse ;

générer un signal électrique correspondant à la température des gaz dans la section de pyrolyse ; et
acheminer lesdits signaux électriques jusqu'à un processeur afin de convertir lesdits signaux électriques en
une estimation du PSO en utilisant une relation mathématique entre les signaux électriques et le PSO.

2. Procédé selon la revendication 1, dans lequel ledit capteur d'oxygène est choisi parmi le groupe consistant en des
capteurs d'oxygène à base de zircone, des capteurs électrochimiques, des micro-capteurs de carburant, et des
capteurs paramagnétiques.

3. Procédé selon la revendication 1, dans lequel ledit capteur de température est choisi parmi le groupe consistant en
des thermocouples, des détecteurs de température à résistance, des pyromètres et des dispositifs de température
distants.

4. Procédé selon l'une quelconque des revendications précédentes, comprenant en outre les étapes consistant à :

relayer ladite estimation du PSO vers un contrôleur asservi afin de générer un signal de contrôle de flux pour
ajuster une vitesse de processus sur la base de ladite estimation du PSO, d'une valeur de PSO présélectionnée,
et du flux du processus, où ladite vitesse de processus est choisie parmi le groupe consistant en des débits
d'air de combustion, d'oxydant et de carburant ; et
relayer ledit signal de contrôle de flux vers le dispositif de contrôle de flux correspondant.

5. Procédé selon la revendication 4, dans lequel le signal électrique correspondant à la concentration en oxygène est
généré par un capteur d'oxygène choisi parmi le groupe consistant en des capteurs d'oxygène à base de zircone,
des capteurs électrochimiques, des micro-capteurs de carburant et des capteurs paramagnétiques, et positionné
dans les gaz dans la section de pyrolyse.

6. Procédé selon la revendication 2 ou 5, dans lequel ledit capteur d'oxygène est un capteur d'oxygène à base de
zircone.

7. Procédé selon la revendication 4, dans lequel le signal électrique correspondant à la température est généré par
un capteur de température choisi parmi le groupe consistant en des thermocouples, des détecteurs de température
à résistance, des pyromètres et des dispositifs de température distants, et positionné afin de détecter la température
des gaz dans la section de pyrolyse.

8. Procédé selon la revendication 3 ou 7, dans lequel le capteur de température est un thermocouple.

9. Procédé selon l'une quelconque des revendications précédentes, dans lequel ladite relation mathématique est :

$$\text{PSO} = a + b/[1 + ((x + eT)/c)^d]$$

où x est la sortie du capteur d'oxygène en millivolts, T est la température en °F, et a à e sont des constantes empiriques.

10. Procédé selon l'une quelconque des revendications 1 à 8, dans lequel ladite relation mathématique est :

$$\text{PSO} = a + b(x + eT) + c(x + eT)^2 + d(x + eT)^3$$

où x est la sortie du capteur d'oxygène en millivolts, T est la température en °F, et a à e sont des constantes empiriques.

11. Système agencé pour mesurer le PSO dans des conditions pyrolytiques dans la section de pyrolyse d'un incinérateur,
comprenant :

des moyens pour générer un signal électrique correspondant à la concentration en oxygène dans les gaz dans
la section de pyrolyse ;

des moyens pour générer un signal électrique correspondant à la température des gaz dans la section de pyrolyse ; et
un dispositif pour convertir lesdits signaux électriques correspondant à la concentration en oxygène et à la température en une estimation du PSO en utilisant une relation mathématique entre les signaux électriques et le PSO.

12. Système selon la revendication 11, comprenant en outre :

des moyens pour générer un signal de contrôle de flux afin d'ajuster une vitesse de processus sur la base de l'estimation du PSO, d'une valeur de PSO présélectionnée et du flux de processus, où ladite vitesse de processus est choisie parmi le groupe consistant en des débits d'air de combustion, d'oxydant et de carburant ; et
un dispositif pour régler la vitesse de processus correspondant audit signal de contrôle.

13. Système selon la revendication 11 ou 12, dans lequel le signal électrique correspondant à la concentration en oxygène est généré par un capteur d'oxygène choisi parmi le groupe consistant en des capteurs d'oxygène à base de zircone, des capteurs électrochimiques, des micro-capteurs de carburant et des capteurs paramagnétiques, et positionné dans les gaz dans la section de pyrolyse.

14. Système selon la revendication 13, dans lequel ledit capteur d'oxygène est un capteur d'oxygène à base de zircone.

15. Système selon la revendication 11 ou 12, dans lequel le signal électrique correspondant à la température est généré par un capteur de température choisi parmi le groupe consistant en des thermocouples, des détecteurs de température à résistance, des pyromètres et des dispositifs de température distants, et positionné afin de détecter la température des gaz dans la section de pyrolyse.

16. Système selon la revendication 15, dans lequel le capteur de température est un thermocouple.

17. Système selon l'une quelconque des revendications 11 à 16, dans lequel ladite relation mathématique est :

$$PSO = a + b/[1 + ((x + eT)/c)^d]$$

où x est la sortie du capteur d'oxygène en millivolts, T est la température en °F, et a à e sont des constantes empiriques.

18. Système selon l'une quelconque des revendications 11 à 16, dans lequel ladite relation mathématique est :

$$PSO = a + b(x + eT) + c(x + eT)^2 + d(x + eT)^3$$

où x est la sortie du capteur d'oxygène en millivolts, T est la température en °F, et a à e sont des constantes empiriques.

LOW NOx
EFFLUENT

STACK

RE-OXIDATION
CHAMBER

RE-OXIDATION
AIR BLOWER

QUENCH
SECTION

QUENCH
WATER GUNS

REFRACTORY
LINING

ELECTRICAL SIGNAL
FOR PO2

O2 SENSOR

T SENSOR

ELECTRICAL SIGNAL
FOR T GAS

PROCESSOR

COMBUSTION
AIR BLOWER

PSO
ESTIMATE

AUXILIARY
FUEL

BURNER

WASTE
INJECTION

BURNER WATER

PYROLYZING
SECTION

CONTROL
SIGNAL

FEEDBACK
CONTROLLER

PRESELECTED
PSO VALUE

FIG. 2

12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0561044 A
- US 4517906 A
- US 4182246 A
- US 4395958 A